(19) Europäisches Patentamt
European Patent Office
Office européen des brevets

(11) **EP 2 978 633 B1**

(12) **FASCICULE DE BREVET EUROPEEN**

(45) Date de publication et mention de la délivrance du brevet:
**25.09.2019 Bulletin 2019/39**

(21) Numéro de dépôt: **14713806.9**

(22) Date de dépôt: **25.03.2014**

(51) Int Cl.:
*B60N 3/00* *(2006.01)* *B60N 2/42* *(2006.01)*
*B60N 2/427* *(2006.01)* *B64D 11/06* *(2006.01)*

(86) Numéro de dépôt international:
**PCT/EP2014/055920**

(87) Numéro de publication internationale:
**WO 2014/154666 (02.10.2014 Gazette 2014/40)**

(54) **SIEGE DE VEHICULE EQUIPE D'UN ELEMENT RABATTABLE, TEL QU'UNE TABLETTE**

FAHRZEUGSITZ AUSGESTATTET MIT EINEM KLAPPBAREN ELEMENT, WIE Z.B. EINEM KLAPPTISCH

VEHICLE SEAT EQUIPPED WITH A FOLDABLE ELEMENT, SUCH AS A FOLDING TABLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.03.2013 FR 1352709**

(43) Date de publication de la demande:
**03.02.2016 Bulletin 2016/05**

(73) Titulaire: **Expliseat**
**75006 Paris (FR)**

(72) Inventeurs:
• SAADA, Benjamin, Jacob
**75002 Paris (FR)**
• SAMUELIAN, Jean-Charles, Marcel
**75005 Paris (FR)**
• TEJEDOR, Vincent
**33700 Merignac (FR)**

(74) Mandataire: **Brevalex**
**95, rue d'Amsterdam**
**75378 Paris Cedex 8 (FR)**

(56) Documents cités:
**FR-A1- 2 781 440 FR-A1- 2 883 529**

**Description**

Domaine technique de l'invention

La présente invention concerne le domaine des transports, entre autres collectifs, de passagers, notamment par la route, le rail ou l'air.

Elle concerne plus particulièrement la réalisation d'un siège de véhicule dont un élément rabattable, fixé sur le dossier du siège, constitué notamment par une tablette, peut pivoter vers l'avant du siège, en particulier à travers le dossier. Cette disposition est prévue pour amoindrir les effets d'un choc frontal du véhicule sur le corps, et en particulier la tête, d'un passager se trouvant sur un siège placé derrière le siège considéré, muni de l'élément rabattable.

Art antérieur et problème posé

Le volume et le poids des sièges des véhicules sont des préoccupations auxquelles on cherche à répondre pour diminuer l'empreinte environnementale du transport, en particulier dans les moyens de transports collectifs. La diminution du volume et du poids ne doit cependant pas avoir d'impact sur la sécurité du passager.

Dans le transport aérien en particulier, la réduction du volume et du poids est exacerbée par l'énergie nécessaire pour un vol donné. La sécurité étant un élément incontournable, les stratégies d'allègement doivent se faire sans compromettre la résistance du siège. En réduisant le volume unitaire des sièges, il est possible de diminuer l'espacement entre deux rangées de sièges et d'augmenter le nombre de passagers pouvant prendre place au sein des aéronefs ou, à l'inverse, d'augmenter l'espace dévolu à chaque passager. Un meilleur remplissage de l'aéronef permet, à flux de passagers constant sur une ligne aérienne, de diminuer le nombre de vols. De même, la réduction du poids unitaire des sièges limitant l'énergie nécessaire pour un vol donné, le carburant nécessaire pour ces vols s'en trouve économisé, ce qui réduit d'autant les rejets de gaz à effet de serre.

Le brevet WO/2010/086785 montre l'état de l'art des éléments pivotables fixés à un siège : ces éléments possèdent une ou plusieurs positions lors de leur utilisation par le passager, et une position fixe repliée lors du rangement de l'élément. L'élément en question peut être, sans limitation, un accoudoir, un porte-gobelet, une tablette, un écran ou un appareil électronique, un porte manteau.

Le brevet WO/2011/094668 indique plus précisément une façon de définir la position repliée d'un élément, en l'occurrence une tablette, lorsqu'elle n'est pas utilisée. Un évidemment est pratiqué dans le siège, et la tablette vient s'insérer dans cet évidemment. Un revêtement peut être ajouté sur la partie exposée de la tablette pour amortir un passager en cas de choc.

Le brevet WO/2013/003537 propose de positionner un élément, à nouveau une tablette, sur un bras pivotant, dans l'objectif de pouvoir orienter la position de l'élément lors de son utilisation par le passager. A nouveau, la position quand l'élément n'est pas utilisé est simplement une position fixe sensiblement verticale.

Le brevet WO/2013/006749 révèle quant à lui un dispositif actif de repliement de la tablette quand le siège est en position droite : la tablette peut être dépliée, à des inclinaisons différentes selon l'inclinaison du siège, et elle est automatiquement rabattue quand le siège est en position droite.

Tous ces aménagements pour la fixation et le positionnement des éléments du siège, comme la tablette, sont basés sur le principe que l'élément est dans une position fixe et non modifiable quand il n'est pas utilisé, c'est-à-dire dans un « état rangé ». Ces éléments peuvent être dangereux en cas d'accident, car ils sont sur la trajectoire empruntée par la tête du passager pour le cas des éléments fixés à l'arrière du dossier.

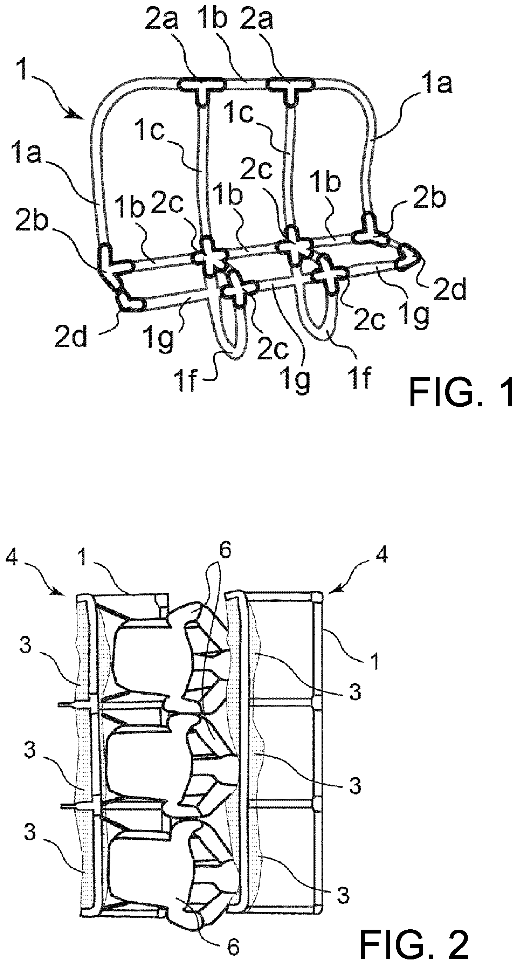

D'autre part, la demande internationale WO 2012/104 248 divulgue un siège ultra léger pour aéronef, de faible encombrement et de poids relativement faible, tout en alliant le confort du passager, notamment au niveau de l'assise et du dossier. En référence à la figure 1, un exemple de structure 1 pour former un ensemble de trois sièges est représenté. La structure 1 est constituée de plusieurs éléments tubulaires 1A, 1B, 1C, 1D, 1F et 1G, assemblés les uns aux autres par différentes pièces de jonction 2A, 2B, 2C, 2D. On constate ainsi que des espaces vides sont ménagés au niveau des assises et des dossiers des trois sièges, afin que des textiles puissent s'étendre entre les éléments tubulaires et constituer les éléments fonctionnels des sièges.

D'autre part, la sécurité des passagers doit être assurée en cas de choc violent, notamment frontal, de l'aéronef, par exemple en cas de crash. Dans le cas de la structure 1, décrite à la figure 1, le dossier du siège ne se plie pas lors du choc, puisque la structure 1 ne se déforme pas. Par contre, comme décrit dans la demande internationale WO 2012/130809, l'utilisation d'un textile absorbeur d'énergie tendu entre les éléments tubulaires 1A-1G de la structure 1 permet d'absorber l'énergie du choc en ralentissant de façon progressive le passager.

La figure 2 montre un exemple de réalisation d'un ensemble de deux rangées 4 de trois sièges selon l'art antérieur. Lors d'un choc frontal, chaque passager 6 est projeté vers l'avant, contre l'arrière du dossier 3 du siège placé devant lui. Les dossiers 3, constitués de tissus absorbeurs d'énergie, tendus au milieu de la structure 1, se déforment donc et absorbent l'énergie du choc, en ralentissant de façon progressive le passager 6, notamment sa tête. Dans ce cas, la présence d'un élément rigide rabattable, telle qu'une tablette, sur le dossier 3 du siège de devant peut constituer un danger pour le passager 6, lors d'un tel choc. En effet, le passager 6 ne vient plus heurter le tissu déformable constituant le dossier 3, mais une tablette rigide solidairement liée à la structure 1 rigide qui entrave sa progression. Le choc ressenti par le passager 6 peut alors être supérieur aux impératifs réglementaires. Le critère HIC pour Head Injury Criterion en anglais, dont la formule est donnée ci-dessous, peut en particulier excéder le seuil de 1000 :

$$HIC = \left( (t_2 - t_1) \left( \frac{1}{t_2 - t_1} \int_{t_1}^{t_2} a(t)dt \right)^{5/2} \right)_{max}$$

Dans cette formule, a(t) est l'accélération en m.s$^{-1}$ du centre de gravité de la tête, $t_1$ et $t_2$ deux instants, mesurés en s, de la cinématique, avec $t_2 - t_1 > 15$ ms.

De plus, si l'on souhaite fonctionnaliser l'arrière du siège 5, afin d'y insérer des accessoires accessibles au passager 6 se trouvant sur le siège 5 de derrière, il faut prendre garde que ces accessoires ne constituent pas un obstacle rigide lors d'un crash.

Enfin, le document de brevet FR 2 883 529 A1 décrit un siège de véhicule, équipé d'une tablette réglable, adaptable, et pivotante autour d'un axe horizontal, face au passager se trouvant sur le siège se trouvant derrière le siège concerné. Le dispositif, décrit dans ce document, permet de positionner ladite tablette dans plusieurs positions, par actionnement de la personne se trouvant derrière la tablette. Un système de trous 42, agencés sur un cylindre indexeur, permet à des billes de venir s'y loger, sous l'action d'un ressort. Les trous 42 sont disposés, entre autres, à différentes positions angulaires, définissant différentes positions fonctionnelles de la tablette. L'effort est donc le même pour faire pivoter la tablette, quelle que soit sa position, notamment le dernier trou définissant une position verticale.

Le but de l'invention est donc de remédier à ces inconvénients et de permettre la progression du corps du passager, en particulier sa tête, se trouvant sur le siège de derrière le siège considéré, à travers le dossier du siège considéré se trouvant devant lui, même en présence d'un élément rabattable sur le dossier du siège, lors d'un crash frontal d'un aéronef et également de ralentir cette progression. L'état de l'art des fixations d'éléments sur les sièges d'aéronef ne permet pas de garantir la sécurité du passager sans augmenter sensiblement le poids du siège, par exemple, ajout de mousse sur la surface inférieure de la tablette.

Exposé de l'invention

A cet effet, l'objet principal de l'invention est un siège de véhicule pour un passager, comportant un dossier présentant une face avant dirigée vers le passager et une face arrière opposée à la face avant, le dossier comportant un élément rabattable vers la face arrière du dossier, monté pivotant par rapport au dossier, au moyen d'au moins une articulation autour d'un axe de rotation permettant à l'élément rabattable de prendre au moins deux positions angulaires prédéterminées, définies par au moins deux moyens de butée, dont une position sensiblement verticale, dans laquelle l'élément rabattable est rabattu vers la face arrière du dossier, le moyen de butée, relatif à la position sensiblement verticale étant placé au niveau de l'articulation.

Dans l'application principale de l'invention, l'élément rabattable est une tablette.

Selon l'invention, le moyen de butée, relatif à la position sensiblement verticale, comporte des moyens de résistance croissante, aptes à maintenir l'élément rabattable dans la position sensiblement verticale, en l'absence d'un choc, et aptes à permettre le prolongement du pivotement de l'élément rabattable vers la face avant du dossier, sous l'effet d'un choc contre l'élément rabattable, notamment le choc de la tête d'un passager se trouvant derrière le siège, notamment sur un siège situé derrière ledit siège, au-delà d'une force d'une valeur prédéterminée et avec une résistance croissante au pivotement.

Par « véhicule », on entend tout moyen de transport ou de déplacement d'au moins un passager, par exemple un avion, une voiture, un train, un bateau, une nacelle d'une attraction à sensation forte, entre autres.

La face avant du dossier est la face du dossier venant au contact du dos du passager assis sur le siège, et la face arrière du dossier est la face du dossier du siège qui fait face au passager situé sur le siège à l'arrière du siège considéré.

Le siège selon l'invention peut en outre comporter l'une ou plusieurs des caractéristiques suivantes prises isolément ou suivant toutes combinaisons techniques possibles.

Les moyens de résistance croissante peuvent comporter au moins un ressort élastique.

Les moyens de résistance croissante peuvent comporter une succession de pièces de blocage, aptes à céder mécaniquement chacune sous l'effet d'une force prédéterminée, croissante dans le sens de la rupture.

L'élément rabattable peut être monté entre deux éléments de structure du dossier, de façon pivotante autour d'un axe de rotation de ladite au moins une articulation, laquelle comporte pour chaque élément de structure, une pièce de rotation faisant saillie par rapport à chaque élément de structure, et en ce que les moyens de résistance croissante comportent des premiers et seconds éléments élastiques fixés chacun par une première extrémité aux pièces de rotation, et par une deuxième extrémité à des pièces de fixation de l'élément rabattable au niveau de ladite au moins une articulation, les premiers et seconds éléments élastiques étant situés de part et d'autre des éléments de structure.

Les moyens de résistance croissante peuvent comporter au moins un élément choisi parmi un système de vérin, un système de frein par frottement, un système de poulies, entre autres.

La valeur prédéterminée de la force du choc peut être supérieure ou égale à 300 Newtons (environ 30 kilogrammes), cette force étant celle pouvant résulter d'un appui du passager contre la tablette en conditions normales.

Ladite au moins une articulation peut comporter une douille dans laquelle est pratiquée une rainure circulaire formant un arc de cercle, dans laquelle est apte à glisser un pion solidaire de l'extrémité pivotante de l'élément rabattable, une extrémité de rainure circulaire constituant un moyen de butée définissant une position sensiblement horizontale de l'élément rabattable.

Liste des Figures

L'invention et ses différentes caractéristiques techniques seront mieux comprises à la lecture de la description détaillée, qui va suivre, avec plusieurs exemples de mise en oeuvre, non limitatifs de celle-ci, ainsi qu'à l'examen des figures schématiques et partielles, sur lesquelles :

- la figure 1 montre, en perspective, une ossature d'un ensemble de trois sièges selon l'art antérieur et selon l'invention ;
- la figure 2 est une vue en perspective de sièges selon de l'art antérieur, en présence de passager et en situation de choc ;
- les figures 3A et 3B sont relatives à une réalisation de moyens de butée, utilisés dans un siège;
- les figures 4A et 4B illustrent le fonctionnement des moyens de butée décrits aux figures 3A et 3B;
- la figure 5 montre une réalisation des moyens de butée utilisés dans le siège selon l'invention;
- les figures 6A et 6B montrent une deuxième réalisation de moyens de butée utilisés dans un siège;
- les figures 7A et 7B montrent une troisième réalisation de moyens de butée utilisés dans un siège selon l'invention;
- les figures 8A et 8B montrent un élément rabattable d'un siège selon l'art antérieur; et
- les figures 9A, 9B et 9C montrent une quatrième réalisation de moyens de butée utilisés dans un siège selon l'invention.

Dans l'ensemble de ces figures, des références identiques peuvent désigner des éléments identiques ou analogues.

De plus, les différentes parties sur les figures ne le sont pas nécessairement selon une échelle uniforme, pour rendre les figures plus lisibles.

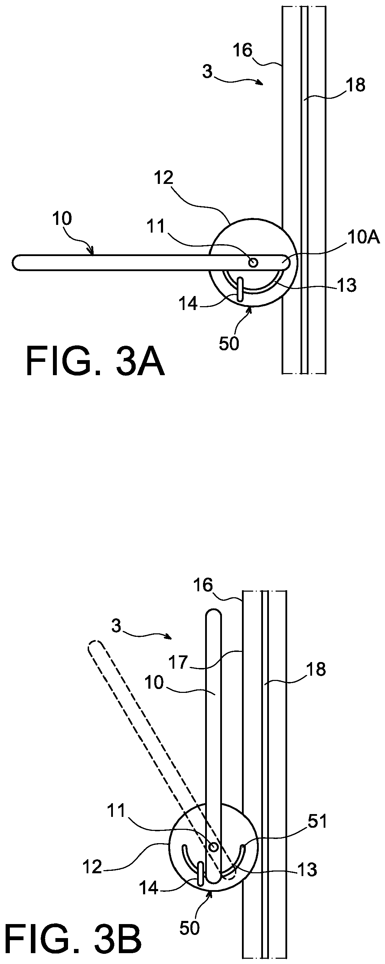

Les réalisations des figures 3A, 3B, 4A, 4B, 6A et 6B ne sont plus concernées par les revendications. Néanmoins, elles ont été conservées pour la bonne compréhension de l'invention.

Description détaillée de plusieurs réalisations de l'invention

De manière générale, des tablettes, montées pivotantes sur la face arrière des dossiers de sièges d'avions, sont bloquées dans leur position sensiblement verticale, afin que ces tablettes puissent rester relevées lors des phases de décollage, d'atterrissage ou quand elles ne sont pas utilisées. Un moyen de butée, tel qu'un loquet monté pivotant sur la structure du dossier, peut définir cette position sensiblement verticale.

En référence aux figures 3A et 3B, une première réalisation d'un siège prévoit deux articulations 50 placées de part et d'autre de la base d'un élément rabattable, à savoir une tablette 10 qui est pivotante, sur l'arrière du dossier 3 du siège. Ces deux articulations 50 comprennent chacune une douille 12, fixée sur un montant 16 du dossier 3, un axe de rotation 11 autour duquel est monté pivotant l'élément rabattable 10. L'extrémité 10A de la tablette 10 se trouvant près de l'axe de rotation 11 suit une rainure circulaire 13, dans laquelle glisse un pion, non représenté, de l'extrémité pivotante 10A de la tablette 10 et dans laquelle est fixée, à un emplacement bien déterminé, une pièce de blocage 14, définissant la position sensiblement verticale de la tablette 10. La position sensiblement horizontale de la tablette 10 est définie par une première extrémité 51 de la rainure circulaire 13. On note que cette rainure circulaire 13 se prolonge au-delà de la pièce de blocage 14, dans le but de permettre à la tablette de poursuivre son mouvement de rotation.

La figure 3A montre la position sensiblement horizontale de la tablette 10, tandis que la figure 3B montre la position sensiblement verticale de la tablette 10, en butée contre la pièce de blocage 14, rabattue vers la face arrière 17 du dossier 3.

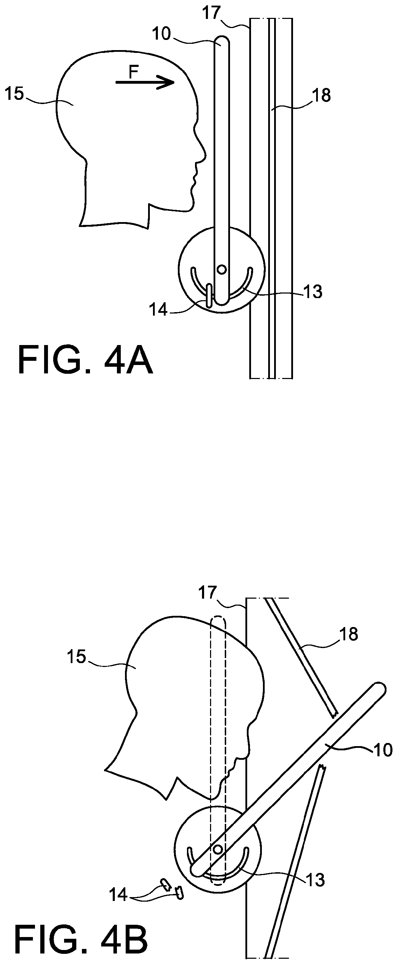

En référence à la figure 4A, en cas de choc frontal du véhicule, par exemple un aéronef, la tête 15 du passager, se trouvant sur le siège placé derrière le siège sur lequel est fixée la tablette 10, est projetée, avec une force F contre la tablette 10.

Comme le montre la figure 4B, la pièce de blocage 14, sous l'effet du choc de la tête 15 contre la tablette 10, cède mécaniquement, soit en se cassant, soit en sautant en dehors de la rainure circulaire 13. De ce fait, la tablette 10 est libérée pour continuer une éventuelle rotation vers l'avant, par rapport à la tête 15, ayant frappée la tablette 10, pour passer à travers la partie centrale 18 du dossier 3 par sa face arrière. La pièce de blocage 14 est, dans ce cas, amovible. On prévoit que la pièce de blocage 14 soit dimensionnée pour se casser sous l'effet d'un choc d'une force égale ou supérieure à 300 Newtons (environ 30 kilogrammes).

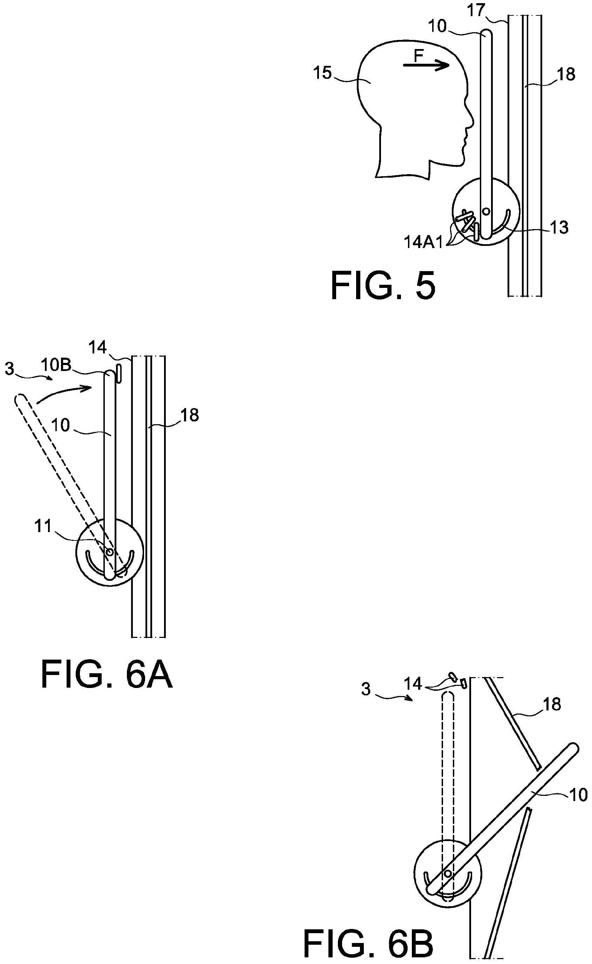

En référence à la figure 5, il est envisagé d'utiliser une succession de plusieurs pièces de blocage 14A sur la rainure circulaire pour constituer des moyens de résistance croissante. Chacune de ces pièces de blocage 14A est donc apte à céder mécaniquement chacune sous l'effet d'une force déterminé, de préférence croissante dans le sens de basculement de la tablette.

Les figures 6A et 6B montrent l'utilisation d'une pièce de blocage 14, placée de façon fixe par rapport au siège, contre l'extrémité 10B de la tablette 10 la plus éloignée de l'axe de rotation 11. Dans ce cas également, la pièce de blocage 14 est dimensionnée pour céder au-delà de la force déterminée F pour permettre à la tablette 10 de continuer sa rotation dans une position basculée vers l'avant, comme représenté sur la figure 6B. Dans ce cas, la pièce de blocage 14 se trouve au niveau d'un loquet monté pivotant sur la structure 16 du dossier 3.

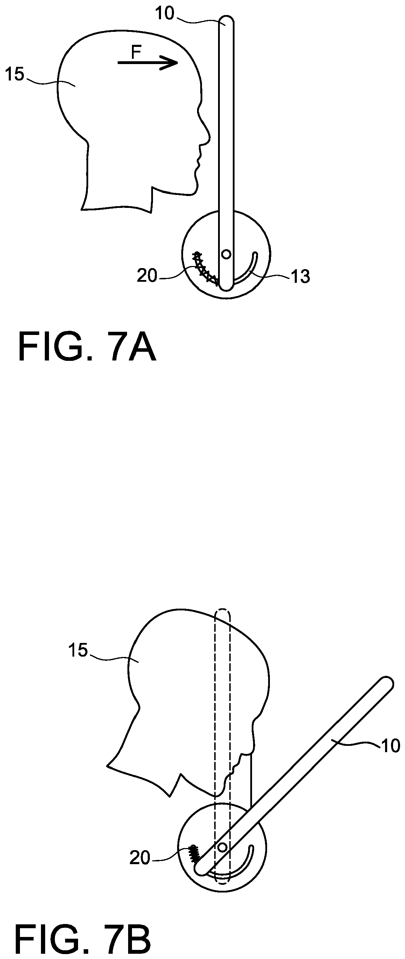

En référence aux figures 7A et 7B, le moyen de butée définissant la position sensiblement verticale peut être un moyen élastique, par exemple un ressort 20 placé au niveau de la rainure circulaire 13, de façon analogue à la pièce amovible 14 de la figure 4A. Ainsi, le ressort 20 maintient en position sensiblement verticale la tablette 10. Dans ce cas, lors du choc de la tête 15 du passager se trouvant sur le siège derrière le siège sur lequel est fixée la tablette 10, le ressort 20 est progressivement comprimé et tend à s'opposer au mouvement de basculement supplémentaire de la tablette 10. Plus les déplacements vers l'avant du siège sont importants, plus grande est la force de rappel du ressort 20. Une telle réalisation permet une réception beaucoup plus confortable de la tête 15 du passager, par rapport à la réalisation précédente, car le choc de cette tête 15 est amorti progressivement par le ressort 20, qui se comprime, comme le montre la figure 6B.

Le ressort 20 de la réalisation représentée sur les figures 7A et 7B, peut être remplacé par d'autres moyens de résistance croissante de rotation, qui peuvent être divers. On évoque ainsi un système de vérin pour réaliser cette résistance, un système de frein par frottement solide ou hydraulique ou encore par frottement solide au sein de l'axe de rotation, tel qu'un système de poulies dentées. Dans ce cas, le vérin hydraulique relie la tablette à la structure et s'étend ou se comprime lorsque la tablette tourne vers l'avant, avec une force de frottement fluide proportionnelle à la vitesse de rotation. Le système par frottement solide peut soit être un système analogue où le vérin est remplacé par deux pièces venant frotter l'une contre l'autre, soit directement au niveau de l'axe de rotation. Le système des poulies dentées imbriquées consiste à combiner deux ou plusieurs poulies dentées au sein de l'axe de rotation, certaines liées solidairement à la tablette, d'autres liées solidairement à la structure du siège. Lors de la rotation de la tablette, les dents de plusieurs poulies viennent se heurter et se déformer de proche en proche, chaque déformation limitant la progression vers l'avant de la tablette.

Avec ce type de réalisation, au lieu de rompre brutalement quand la force exercée par la tête 15 sur la tablette 10 excède un certain seuil, la tablette 10 accompagne le mouvement de la tête 15 vers l'avant de la tablette 10. Ainsi, la tête 15 d'un éventuel passager est amortie plus doucement en cas de choc frontal de l'aéronef. On envisage également de combiner un tel moyen de résistance croissante derrière une pièce de blocage 14, telle que définie dans la réalisation des figures 4A et 4B. Dans ce cas, ce moyen 20 ne joue son rôle que lorsque la pièce de blocage 14 a été brisée.

On précise que la partie centrale 18 du dossier 3 peut être constituée d'un ou plusieurs tissus parallèles, éventuellement espacés les uns des autres, constituant ainsi un dossier 3 d'une épaisseur plutôt conséquente.

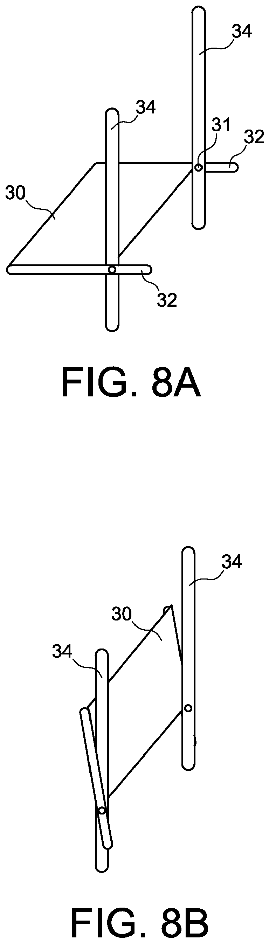

Les figures 8A et 8B montrent un exemple de réalisation d'une tablette 30 de l'art antérieur. Celle-ci est montée pivotante autour d'un axe de rotation 31 horizontal, par rapport à un élément de structure 34 sensiblement vertical. Dans ce cas, les pattes de fixation 32 de la tablette 30 sont placées à l'extérieur des éléments de structure 34 verticaux.

Comme le montre la figure 8B, lorsque la tablette 30 bascule vers le haut, en direction des éléments de structure 34 verticaux, celle-ci se trouve bloquée en position quasi-verticale, par le fait qu'elle vient en butée contre les éléments de structure 34 quasi-verticaux, car sa longueur est supérieure à l'intervalle séparant les deux éléments de structure 34, sensiblement verticaux.

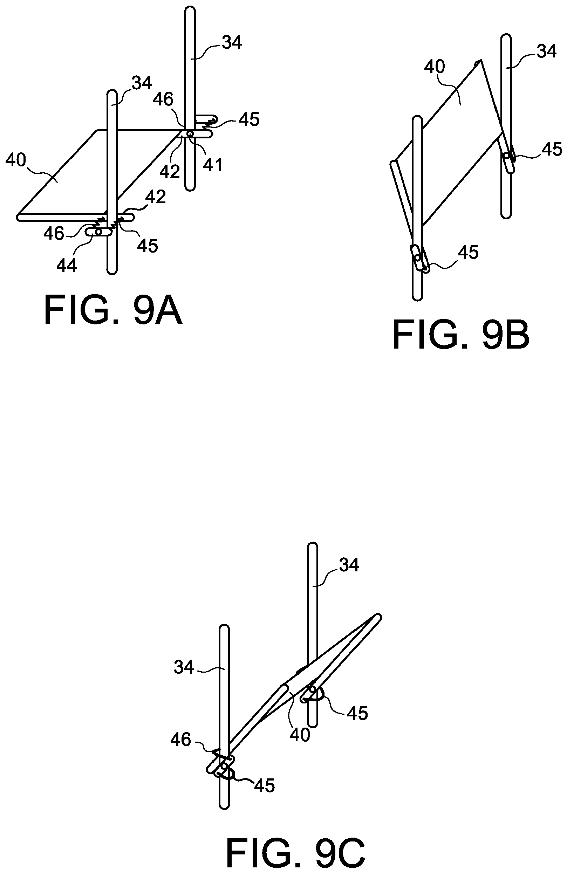

En référence aux figures 9A, 9B et 9C, une deuxième réalisation élastique de moyens de résistance croissante utilise une partie de la structure 1, à savoir les éléments de structure 34 quasi-verticaux. Dans ce cas, des pattes de fixation 42 de la tablette 40 sont positionnées à l'intérieur de deux éléments de structure 34 verticaux, de manière à ce que la tablette 40, qui est également moins longue que l'intervalle des deux éléments de structure 34 verticaux, puisse basculer de l'autre côté de ceux-ci, en direction de la partie centrale du dossier du siège.

La figure 9B montre le début du basculement, tandis que la figure 9C montre la fin du basculement, la tablette 40 étant passée de l'autre côté des éléments de structure 34 quasi-verticaux.

Dans cette réalisation, les deux axes de rotation 41 sont solidaires des pattes de fixation 42 de la tablette 40 et dépassent de l'autre côté de chacun des deux éléments de structure 34 verticaux. De plus, chaque extrémité externe des deux axes de rotation 41 est munie d'un élément de fixation 44, faisant saillie de part et d'autre de l'élément de structure 34 correspondant et étant sensiblement parallèle à la tablette 40. De plus, des premiers éléments élastiques 45 relient les deux extrémités de chacune de ces deux éléments de fixation 44 avec l'élément de la patte de fixation 42 correspondante. De même, des deuxièmes éléments élastiques de fixation 46 relient l'autre extrémité de ces éléments de fixation 44 avec la partie de la patte de fixation 42 se trouvant près de la tablette 40. De ce fait, comme le montre la figure 9B, lorsque la tablette 40 bascule vers le haut, dans une position quasi-verticale, les éléments élastiques 45 et 46 viennent en butée contre l'élément de structure 34 correspondant. Si une force est appliquée sur la tablette 40, celle-ci va continuer son basculement, comme le montre la figure 9C, du côté du dossier. Les premiers et seconds éléments élastiques 45 et 46 sont alors sollicités en extension, puisqu'ils sont rallongés autour de l'élément de structure 34 correspondant. Ils exercent alors une force de rappel croissante avec le basculement de la tablette 40 en direction du dossier. On obtient donc également dans ce cas un ralentissement progressif du basculement de la tête du passager qui est venu buter contre la tablette 40.

La tablette du siège selon l'invention a en particulier un intérêt dès qu'elle est liée à un siège dont la structure du dossier est rigide, dans le sens que cette structure de dossier ne se déforme pas dans le cas d'un crash frontal violent, tel le crash 16 g défini par l'European Technical Standard Order (ETSO) C127a de l'Agence Européenne de Sécurité Aéronautique (EASA). Un squelette tubulaire, tel que celui représenté sur la figure 1, peut être un exemple de la structure 1 d'un tel siège.

## Revendications

1. Siège de véhicule pour un passager, comportant un dossier présentant une face avant dirigée vers le passager et une face arrière opposée à la face avant, le dossier comportant un élément rabattable (10, 40), notamment une tablette, vers la face arrière du dossier, monté pivotant par rapport au dossier, au moyen d'au moins une articulation autour d'un axe de rotation (11, 41) permettant à l'élément rabattable (10, 40) de prendre au moins deux positions angulaires prédéterminées, définies par au moins deux moyens de butée, dont une position sensiblement verticale, dans laquelle l'élément rabattable (10, 40) est rabattu vers la face arrière du dossier, le moyen de butée, relatif à la position sensiblement verticale étant placé au niveau de l'articulation,
   **caractérisé en ce que** le moyen de butée, relatif à la position sensiblement verticale, comporte des moyens de résistance croissante, aptes à maintenir l'élément rabattable (10, 40) dans la position sensiblement verticale, en l'absence d'un choc, et aptes à permettre le prolongement du pivotement de l'élément rabattable vers la face avant du dossier, sous l'effet d'un choc contre l'élément rabattable (10, 40), notamment le choc de la tête (15) d'un passager se trouvant derrière le siège, notamment sur un siège situé derrière ledit siège, au-delà d'une force d'une valeur prédéterminée et avec une résistance croissante au pivotement.

2. Siège selon la revendication 1, **caractérisé en ce que** les moyens de résistance croissante comporte au moins un ressort élastique.

3. Siège selon la revendication 1, **caractérisé en ce que** les moyens de résistance croissante comporte une succession de pièces de blocage (14A), aptes à céder mécaniquement chacune sous l'effet d'une force prédéterminée, croissante dans le sens de la rupture.

4. Siège selon la revendication 1, **caractérisé en ce que** l'élément rabattable (40) est monté entre deux éléments de structure (34) du dossier de façon pivotante autour d'un axe de rotation de ladite au moins une articulation, laquelle comporte pour chaque élément de structure (34), une pièce de rotation (44) faisant saillie par rapport à chaque élément de structure (34), et **en ce que** les moyens de résistance croissante comportent des premiers et seconds éléments élastiques (45, 46) fixés chacun par une première extrémité aux pièces de rotation (44), et par une deuxième extrémité à des pièces de fixation (42) de l'élément rabattable (40) au niveau de ladite au moins une articulation, les premiers et seconds éléments élastiques (45, 46) étant situés de part et d'autre des éléments de structure (34).

5. Siège selon la revendication 1, 2 ou 3, **caractérisé en ce que** les moyens de résistance croissante comportent au moins un élément choisi parmi : un système de vérin, un système de frein par frottement solide ou hydraulique, un système de poulies dentées imbriquées.

6. Siège selon l'une quelconque des revendications précédentes, **caractérisé en ce que** la valeur prédéterminée de la force du choc est supérieure ou égale à 300 Newtons (environ 30 kilogrammes).

**7.** Siège selon l'une quelconque des revendications précédentes, **caractérisé en ce que** ladite au moins une articulation comporte une douille (12) dans laquelle est pratiquée une rainure circulaire (13) formant un arc de cercle, dans laquelle est apte à glisser un pion solidaire d'une extrémité pivotante (10A) de l'élément rabattable (10), une extrémité de la rainure circulaire (13) constituant un moyen de butée définissant une position sensiblement horizontale de l'élément rabattable.

**Patentansprüche**

**1.** Fahrzeugsitz für einen Insassen, enthaltend eine Rückenlehne mit einer dem Insassen zugewandten Vorderseite und einer der Vorderseite entgegengesetzten Rückseite, wobei die Rückenlehne ein in Richtung der Rückseite der Rückenlehne klappbares Element (10, 40), insbesondere einen Klapptisch, umfasst, das bzw. der in Bezug auf die Rückenlehne mittels zumindest eines Gelenks um eine Drehachse (11, 41) schwenkbar gelagert ist, wodurch das klappbare Element (10, 40) zumindest zwei vorbestimmte Winkelstellungen einnehmen kann, die durch zumindest zwei Anschlagmittel definiert sind, darunter eine im Wesentlichen vertikale Stellung, in der das klappbare Element (10, 40) in Richtung der Rückseite der Rückenlehne umgeklappt ist, wobei das Anschlagmittel bezüglich der im Wesentlichen vertikalen Stellung an dem Gelenk angeordnet ist,
**dadurch gekennzeichnet, dass** das Anschlagmittel bezüglich der im Wesentlichen vertikalen Stellung Mittel zur Erhöhung des Widerstands enthält, die dazu geeignet sind, bei ausbleibendem Aufprall das klappbare Element (10, 40) in der im Wesentlichen vertikalen Stellung zu halten, und die dazu geeignet sind, das Fortsetzen der Schwenkbewegung des klappbaren Elements in Richtung der Vorderseite der Rückenlehne unter der Wirkung eines Aufpralls auf das klappbare Element (10, 40), insbesondere eines Aufpralls von dem Kopf (15) eines Insassen, der sich hinter dem Sitz, insbesondere auf einem hinter dem genannten Sitz angeordneten Sitz befindet, über eine Kraft mit vorgegebenen Wert hinaus und mit zunehmendem Schwenkwiderstand zu ermöglichen.

**2.** Sitz nach Anspruch 1, **dadurch gekennzeichnet, dass** die Mittel zur Erhöhung des Widerstands zumindest eine elastische Feder enthalten.

**3.** Sitz nach Anspruch 1, **dadurch gekennzeichnet, dass** die Mittel zur Erhöhung des Widerstands eine Reihe von Sicherungsteilen (14A) enthalten, die dazu geeignet sind, jeweils unter der Einwirkung einer vorgegebenen Kraft, in die Bruchrichtung ansteigt, mechanisch nachzugeben.

**4.** Sitz nach Anspruch 1, **dadurch gekennzeichnet, dass** das klappbare Element (40) zwischen zwei Strukturelementen (34) der Rückenlehne um eine Drehachse des zumindest einen Gelenks schwenkbar gelagert ist, das für jedes Strukturelement (34) ein von jedem Strukturelement (34) vorstehendes Rotationsteil (44) enthält, und dadurch, dass die Mittel zur Erhöhung des Widerstands erste und zweite elastische Elemente (45, 46) enthalten, die jeweils mit einem ersten Ende an die Rotationsteile (44) und mit einem zweiten Ende an Befestigungsteile (42) des klappbaren Elements (40) im Bereich des zumindest einen Gelenks befestigt sind, wobei die ersten und die zweiten elastischen Elemente (45, 46) auf beiden Seiten der Strukturelemente (34) angeordnet sind.

**5.** Sitz nach Anspruch 1, 2 oder 3, **dadurch gekennzeichnet, dass** die Mittel zur Erhöhung des Widerstands zumindest ein Element, ausgewählt aus einem Kraftzylindersystem, einem festen oder hydraulischen Reibungsbremssystem, einem System aus ineinandergreifenden Zahnscheiben, enthalten.

**6.** Sitz nach einem der vorangehenden Ansprüche, **dadurch gekennzeichnet, dass** der vorgegebene Wert der Aufprallkraft höher oder gleich 300 Newton (etwa 30 Kilogramm) ist.

**7.** Sitz nach einem der vorangehenden Ansprüche, **dadurch gekennzeichnet, dass** das zumindest eine Gelenk eine Hülse (12) enthält, in welcher eine kreisförmige Nut (13) eingebracht ist, die einen Kreisbogen bildet und in welcher ein fest mit einem verschwenkbaren Ende (10A) des klappbaren Elements (10) verbundener Zapfen gleitbeweglich ist, wobei ein Ende der kreisförmigen Nut (13) ein Anschlagmittel bildet, das eine im Wesentlichen horizontale Stellung des klappbaren Elements definiert.

**Claims**

**1.** A vehicle seat for a passenger, including a seat back having a front face pointing to the passenger and a rear face opposite to the front face, the seat including a fold-down element (10, 40), in particular a table, to the rear face of the seat back, pivotably mounted with respect to the seat back, by means of at least one hinge about an axis of rotation (11, 41) enabling the fold-down element (10, 40) to take on at least two predetermined angular positions, defined by at least two abutment means, including a substantially vertical position, in which the front-down element (10, 40) is folded-down to the rear face of the seat back, **characterised in that** the abutment means, relating to the substantially vertical position, includes increasing resistance means, able to hold the fold-down element (10, 40) in the substantially vertical position, in the absence of a collision, and able to allow the fold-down element pivoting to be continued to the front face of the seat back, under the effect of a collision against the fold-down element (10, 40), in particular the collision of the head (15) of a passenger located behind the seat, in particular in a seat located behind said seat, beyond a force with a predetermined value and with an increasing pivoting resistance.

2. The seat according to claim 1, **characterised in that** the increasing resistance means include at one elastic spring.

3. The seat according to claim 1, **characterised in that** the increasing resistance means include a series of blocking parts (14A), each able to break off mechanically under the effect of a predetermined force, increasing in the breaking direction.

4. The seat according to claim 1, **characterised in that** the fold-down element (40) is mounted between two structure elements (34) of the seat back, pivotably about an axis of rotation of said at least one hinge, which includes for each structure element (34), a rotary part (44) projecting from each structure element (34), and **in that** the increasing resistance means include first and second elastic elements (45, 46) each attached by a first end to the rotary parts (44), and by a second end to attachment parts (42) for attaching the fold-down element (40) at said at least one hinge, the first and second elastic elements (45, 46) being located on either side of the structure elements (34).

5. The seat according to claim 1, 2, or 3, **characterised in that** the increasing resistance means include at least one element chosen from: a jack system, a solid or hydraulic friction brake system, a system of nested toothed pulleys.

6. The seat according to any of the preceding claims, **characterised in that** the predetermined value of the collision force is higher than or equal to 300 Newtons (about 30 kilogrammes).

7. The seat according to any of the preceding claims, **characterised in that** said at least one hinge includes a bush (12) in which a circular groove (13) forming an arc of circle is provided, wherein a pin integral with a pivoting end (10A) of the fold-down element (10) is slidable, one end of the circular groove (13) making up an abutment means defining a substantially horizontal position of the fold-down element.

FIG. 1

FIG. 2

FIG. 3A

FIG. 3B

FIG. 4A

FIG. 4B

FIG. 5

FIG. 6A

FIG. 6B

FIG. 7A

FIG. 7B

FIG. 8A

FIG. 8B

FIG. 9A

FIG. 9B

FIG. 9C

**EP 2 978 633 B1**

## RÉFÉRENCES CITÉES DANS LA DESCRIPTION

### Documents brevets cités dans la description

- WO 2010086785 A
- WO 2011094668 A
- WO 2013003537 A
- WO 2013006749 A
- WO 2012104248 A
- WO 2012130809 A
- FR 2883529 A1